# EUROPÄISCHE PATENTSCHRIFT

(11) **EP 4 633 871 B1**
(45) Veröffentlichungstag und Bekanntmachung des Hinweises auf die Patenterteilung: **26.08.2026**
(21) Anmeldenummer: 24718756.0
(22) Anmeldetag: 09.04.2024
(51) Int. Cl.: B25J 9/00, B25J 9/10, B25J 15/00

(54) **VORRICHTUNG AUFWEISEND MINDESTENS EINE MEHRERE DISKRETE ARTIKEL IN EINEM ARTIKELSTROM TRANSPORTIERENDE FÖRDEREINRICHTUNG UND MINDESTENS EINE HANDHABUNGSEINRICHTUNG**
DEVICE HAVING AT LEAST ONE CONVEYOR DEVICE, WHICH TRANSPORTS A PLURALITY OF DISCRETE ARTICLES IN AN ARTICLE FLOW, AND AT LEAST ONE HANDLING DEVICE
DISPOSITIF COMPRENANT AU MOINS UN DISPOSITIF DE TRANSPORT QUI TRANSPORTE UNE PLURALITÉ D'ARTICLES DISCRETS DANS UN FLUX D'ARTICLES ET AU MOINS UN DISPOSITIF DE MANIPULATION

(30) Priorität: 20.04.2023 DE 102023110015
(43) Veröffentlichungstag der Anmeldung: 22.10.2025
(73) Patentinhaber: Koenig & Bauer AG, 97080 Würzburg (DE)
(72) Erfinder: PFLÜGER, Matthias, 32257 Bünde (DE); REDEKER, Ralf-Rudi, 32257 Bünde (DE)
(74) Vertreter: Koenig & Bauer AG
(86) Internationale Anmeldenummer: PCT/EP2024/059586
(87) Internationale Veröffentlichungsnummer: WO 2024/217933

(56) Entgegenhaltungen:
- US-A1- 2019 000 094
- US-B1- 8 997 438

## Beschreibung

Die Erfindung betrifft eine Vorrichtung aufweisend mindestens eine mehrere diskrete Artikel in einem Artikelstrom transportierende Fördereinrichtung und mindestens eine Handhabungseinrichtung gemäß Anspruch 1.

Durch die US 2019/0299397 A1 ist ein Roboter-Handhabungsgerät bekannt, umfassend: ein erstes Armelement, das so konfiguriert ist, dass es um eine erste Schwenkachse schwenkt; eine erste Antriebseinheit, die dazu konfiguriert ist, das erste Armelement in Bewegung zu versetzen; ein zweites Armelement, das so konfiguriert ist, dass es um eine zweite Schwenkachse schwenkt, wobei das zweite Armelement mit dem ersten Armelement verbunden ist und einen distalen Endabschnitt aufweist; ein drittes Armelement, das so konfiguriert ist, dass es um eine dritte Schwenkachse schwenkt, wobei das dritte Armelement einen distalen Endabschnitt aufweist; und eine Trägereinheit, die mit dem distalen Endabschnitt des zweiten Armelements und dem distalen Endabschnitt des dritten Armelements verbunden ist, um einen Abstand zwischen dem distalen Endabschnitt des zweiten Armelements und dem distalen Endabschnitt des dritten Armelements zu definieren.

Durch die DE 10 2016 123 770 A1 ist ein System zum Umgang mit im Massenstrom bewegten Artikeln wie Getränkebehältnissen oder dergleichen bekannt, umfassend eine Fördereinrichtung, über welche eine Vielzahl an Artikeln transportierbar ist, und eine bestimmte Handhabungseinrichtung, welche ausgewählte und über die eine Fördereinrichtung transportierte Artikel, deren jeweilige Längsachse gegenüber einer Horizontalen eine geneigte Orientierung besitzt, aussondern und/oder in eine aufrechte Orientierung überführen kann, wobei die eine bestimmte Handhabungseinrichtung mit einer Steuer- und/oder Regeleinheit in Verbindung steht, wobei die eine bestimmte Handhabungseinrichtung über die Steuer- und/oder Regeleinheit zum Ausführen wenigstens einer zusätzlichen Manipulationsarbeit ansteuerbar ist, welche wenigstens eine zusätzliche Manipulationsarbeit über das Aussondern und/oder Aufrichten der über die eine Fördereinrichtung transportierten ausgewählten Artikel hinausgeht.

Durch die DE 10 2016 202 362 A1 ist eine Vorrichtung zur Handhabung, zum Stapeln und/oder zum Manipulieren von Artikeln, Gruppierungen, Gebinden, Stückgütern, Gebinde- und/oder Stückgutlagen oder dergleichen bekannt, mit wenigstens einem innerhalb eines definierbaren Bewegungsraumes höhen- und/oder lageveränderlichen Manipulator, der mindestens ein Mittel zum Greifen, Verschieben und/oder Handhaben der Artikel, Gruppierungen, Gebinde, Stückgüter, Gebinde- und/oder Stückgutlagen umfasst, wobei dem Manipulator wenigstens eine Applikationseinrichtung zur regulierbaren Beaufschlagung der mit dem wenigstens einen Mittel zum Greifen, Verschieben und/oder Handhaben der Artikel, Gruppierungen, Gebinde, Stückgüter, Gebinde- und/oder Stückgutlagen jeweils erfassten bzw. zu erfassenden Artikel, Gruppierungen, Gebinde, Stückgüter, Gebinde- und/oder Stückgutlagen mit fluidem Medium zugeordnet ist.

Durch die DE 10 2018 113 838 A1 ist eine Lagenbildungsvorrichtung mit einer als Förderer ausgebildeten Auflagefläche für Stückgut und mit einem Kurbelgetriebe bekannt, wobei das Kurbelgetriebe ein ebenes, fünfgliedriges Gelenkgetriebe umfasst, wobei das Kurbelgetriebe oberhalb der Auflagefläche angeordnet ist und in einer Ebene parallel zu der Auflagefläche wenigstens zwei Freiheitsgrade aufweist.

Durch die DE 10 2008 037 865 A1 ist eine Transportvorrichtung mit variablem Transportabstand von Aufnahmevorrichtungen für Gegenstände wie z. B. von Vorformlingen bzw. Rohlingen zur Herstellung von Kunststoffflaschen bekannt.

Durch die US 3,294,215 A ist eine Artikelbeförderungsvorrichtung mit einem Kanal mit konvergierenden Seitenwänden und einer Artikelbeförderungseinrichtung bekannt, wobei die Artikelbeförderungseinrichtung in dem Kanal positioniert ist, wobei die Einrichtung eine Vielzahl von miteinander verbundenen Elementen umfasst, von denen jedes ein Paar Rollen umfasst, die in dem Kanal positioniert sind und mit den Wänden in Eingriff stehen, eine Rolle pro Wand, einen Artikeleingriffsfinger, der die Rollen verbindet und sich über eine der Wände hinaus erstreckt, ein Zwischenglied zum Verbinden jedes der Elemente mit dem benachbarten Element, und Mittel zum Vorrücken der Artikelbeförderungsmittel in dem Kanal, um Artikel dort entlang zu befördern und sanft zu beschleunigen die Gegenstände in Übereinstimmung mit dem Konvergenzwinkel der Konvergenzseitenwände.

Durch die US 3,292,769 A ist ein Mechanismus mit veränderlicher Geschwindigkeit bekannt, umfassend eine Kette mit einer Folge von Gliedern und Scharnierelementen in einer ersten und einer zweiten Reihe, die jeweils und abwechselnd erste benachbarte Enden der Glieder und zweite benachbarte Enden der Glieder schwenkbar miteinander verbinden, ein Paar in Längsrichtung beabstandeter Räder, die montiert sind, um sich um ihre eigene Achse zu drehen und mit Abschnitten, die an den ersten benachbarten Enden der Glieder an der Kette angreifen, damit sich die Kette mit den Rädern bewegt und die Räder durch die Glieder und ihre entsprechenden Scharnierelemente beweglich miteinander verbindet, und umlaufende Führungsmittel mit gegenüberliegenden Führungsflächen, die an diesen angreifen, so dass die Kette jeweils an den ersten angrenzenden Enden und den angrenzenden Enden der Glieder und zumindest entlang eines Abschnitts der Führungsmittel zwischen den Rädern in variierendem Abstand voneinander angeordnet ist, um die Glieder in eine zick-zack-gefaltete Beziehung zueinander zu zwingen und einzuschränken, wobei die entsprechenden Scharnierelemente davon im Abstand zueinander variieren und sich somit mit variierender Geschwindigkeit entlang des Zwischenabschnitts bewegen.

Durch die EP 0 250 470 B1 ist eine Einrichtung zum Bewegen und Positionieren eines Gegenstandes im Raum bekannt, mit wenigstens einem Grundteil, wenigstens einem beweglichen Teil und wenigstens drei Betätigungsanordnungen, deren jede einen feststehenden Abschnitt aufweist sowie einen beweglichen Abschnitt mit einem einzigen Freiheitsgrad bezüglich seines feststehenden Abschnitts, wobei der feststehende Abschnitt einer jeden Betätigungsanordnung fest mit dem Grundteil verbunden ist, während jeder bewegliche Abschnitt der Betätigungsanordnung fest mit dem beweglichen Teil über ein Verbindungsteil verbunden ist, wobei die Gesamtanordnung derart ausgestaltet ist, dass die Neigung und die Ausrichtung im Raum des beweglichen Teils unverändert bleiben bei beliebigen Bewegungen der beweglichen Abschnitte der Betätigungsanordnungen, wobei jedes Verbindungsteil einerseits gelenkig am beweglichen Abschnitt der Betätigungsanordnung derart angeordnet ist, dass es zwei Freiheitsgrade bezüglich des beweglichen Teils der Betätigungsanordnung aufweist und andererseits gelenkig am beweglichen Teil derart angeordnet ist, dass es zwei Freiheitsgrade bezüglich des beweglichen Teils aufweist.

Die Dokumente US8997438B1 und US2019/000094A1 sind ebenfalls Stand der Technik.

Der Erfindung liegt die Aufgabe zugrunde, eine Vorrichtung aufweisend mindestens eine mehrere diskrete Artikel in einem Artikelstrom transportierende Fördereinrichtung und mindestens eine Handhabungseinrichtung zu schaffen.

Die Aufgabe wird erfindungsgemäß durch die Merkmale des Anspruches 1 gelöst. Die abhängigen Ansprüche betreffen vorteilhafte Ausgestaltungen und/oder Weiterbildungen der gefundenen Lösung.

Die mit der Erfindung erzielbaren Vorteile bestehen insbesondere darin, dass die vorgeschlagene Vorrichtung sehr kompakt ausgebildet werden kann und auf engstem Raum eine Änderung in der Teilung und/oder Geschwindigkeit und/oder Bewegungsrichtung von Artikeln eines Artikelstroms ermöglicht. Insbesondere ist vorteilhaft, dass die vorgeschlagene Vorrichtung auf Artikel eines Artikelstroms selektiv wirken kann, wobei zudem eine Änderung in der Teilung und/oder Geschwindigkeit und/oder Bewegungsrichtung frei und individuell ohne konstruktive Anpassungen einstellbar ist. Die vorgeschlagene Vorrichtung ist zudem in sehr kurzer Zeit und kostengünstig umrüstbar, wenn z. B. eine Produktion umgestellt wird. Die Umrüstung kann durch eine Änderung in der Programmierung der die Antriebe steuernden Steuereinheit bisweilen sogar während eines laufenden Betriebs der Vorrichtung erfolgen und ausgeführt werden. Die vorgeschlagene Vorrichtung ist auch aufgrund ihrer nur wenigen beweglichen Teile verschleißarm und damit kaum störanfällig.

Ausführungsbeispiele der Erfindung sind in den Zeichnungen dargestellt und werden im Folgenden näher beschrieben. Aus diesen Ausführungsbeispielen sind weitere Vorteile ersichtlich.

Es zeigen:
- Fig. 1: ein erstes Ausführungsbeispiel einer Vorrichtung aufweisend mindestens eine mehrere diskrete Artikel in einem Artikelstrom transportierende Fördereinrichtung und mindestens eine Handhabungseinrichtung;
- Fig. 2: ein zweites Ausführungsbeispiel der erfindungsgemäßen Vorrichtung;
- Fig. 3: ein drittes Ausführungsbeispiel der erfindungsgemäßen Vorrichtung;
- Fig. 4: ein viertes Ausführungsbeispiel der erfindungsgemäßen Vorrichtung;
- Fig. 5: ein fünftes Ausführungsbeispiel der erfindungsgemäßen Vorrichtung
- Fig. 6: ein Ausführungsbeispiel zur Einstellung eines Endeffektors in einer definierten Ausrichtung zu einem mit der Fördereinrichtung transportierten Artikel bei einer ersten Position der Handhabungseinrichtung;
- Fig. 7: ein Ausführungsbeispiel zur Einstellung des Endeffektors in der definierten Ausrichtung zu dem betreffenden mit der Fördereinrichtung transportierten Artikel bei einer zweiten Position der Handhabungseinrichtung.

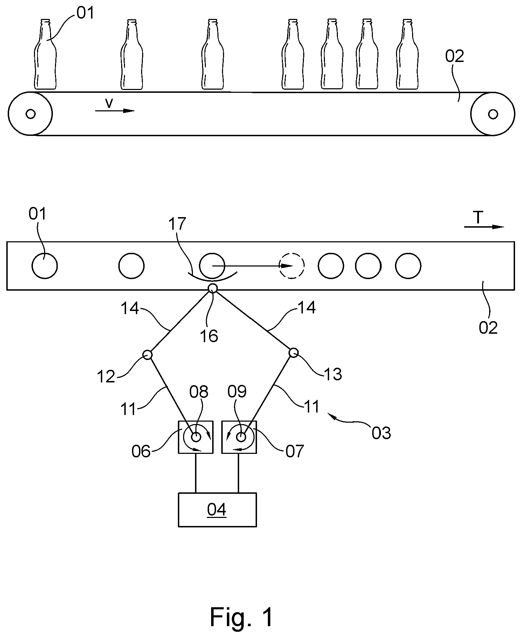

Fig. 1 zeigt in einer Draufsicht mit zugehörigem Längsschnitt rein schematisch und stark vereinfacht ein erstes Ausführungsbeispiel einer Vorrichtung aufweisend mindestens eine mehrere diskrete Artikel 01 in einem Artikelstrom transportierende Fördereinrichtung 02 und mindestens eine Handhabungseinrichtung 03. Diese Vorrichtung ist somit eine fördertechnische Anlage mit manipulativen Eingriffsmöglichkeiten auf den Artikelstrom bzw. eine fördertechnische Anlage mit einer Einrichtung zur Manipulation des Artikelstroms. Die betreffende Handhabungseinrichtung 03 ist z. B. durch einen an die in der Fördertechnik geltenden spezifischen Anforderungen angepassten Roboter, insbesondere durch einen Industrieroboter realisiert, dessen Bewegungen hinsichtlich Bewegungsfolge und Wegen und/oder Winkeln frei, d. h. ohne mechanischen oder menschlichen Eingriff, programmierbar und ferngesteuert sind. Der Ausdruck "diskrete Artikel 01" bedeutet in diesem Kontext, dass im Artikelstrom aufeinanderfolgende Artikel 01 durch endliche Intervalle oder Abstände voneinander getrennt in oder auf der betreffenden Fördereinrichtung 02 angeordnet sind. Die betreffende Fördereinrichtung 02 ist z. B. als ein endlos umlaufendes Förderband ausgebildet und transportiert die Artikel 01 in eine bestimmte Transportrichtung T. Jeder der transportierten Artikel 01 ist jeweils als ein Hohlkörper, vorzugsweise jeweils als ein z. B. zylindrischer Rundkörper, insbesondere jeweils als eine Flasche oder Dose ausgebildet, so dass die betreffende Fördereinrichtung 02 vorzugsweise derart ausgebildet ist, dass sie für den Transport dieser Hohlkörper geeignet ist. Die betreffende Fördereinrichtung 02 transportiert die Artikel 01 vorzugsweise in einer horizontalen Transportebene. Zumindest während ihres Transports sind die z. B. jeweils als ein Hohlkörper ausgebildeten Artikel 01 vorzugsweise aufrechtstehend auf der betreffenden Fördereinrichtung 02 angeordnet. Die zu transportierenden Artikel 01 sind z. B. aus einem Kunststoff oder aus Glas oder aus einer Keramik ausgebildet.

Ein Bewegungsablauf der betreffenden Handhabungseinrichtung 03 ist von einer vorzugsweise frei programmierbaren Steuereinheit 04 gesteuert. Die betreffende Handhabungseinrichtung 03 ist derart in der vorgeschlagenen Vorrichtung räumlich angeordnet, dass sie sequentiell und selektiv auf mit der betreffenden Fördereinrichtung 02 transportierte Artikel 01 wirken kann und während ihres Betriebs auch tatsächlich wirkt. Die betreffende Fördereinrichtung 02 ist somit im Arbeitsbereich der betreffenden Handhabungseinrichtung 03 angeordnet.

Die betreffende Handhabungseinrichtung 03 weist jeweils zwei von der Steuereinheit 04 positionsgeregelte vorzugsweise elektrische Antriebe 06; 07 z. B. in Form von Servomotoren auf, wobei an der jeweils bidirektional drehbaren Antriebswelle 08; 09 - insbesondere Motorwelle - eines jeden dieser Antriebe 06; 07 jeweils mit seinem ersten Ende ein erster Hebelarm 11 drehfest angeordnet ist. Die bidirektionale Drehbarkeit einer jeden Antriebswelle 08; 09 ist in der Fig. 1 jeweils durch einen Doppeldrehrichtungspfeil angedeutet. Der Ausdruck "Hebelarm" bezeichnet hier und nachfolgend jeweils einen einseitigen Hebel. Am zweiten Ende des jeweiligen ersten Hebelarms 11 ist jeweils mittels eines um eine hier als erste Achse bezeichnete Rotationsachse 12; 13 drehbeweglichen ersten Drehgelenks ein erstes Ende eines zweiten Hebelarms 14 verbunden. Die zweiten Enden der jeweiligen zweiten Hebelarme 14 sind mittels eines um eine als zweite Achse bezeichnete weitere Rotationsachse 16 drehbeweglichen zweiten Drehgelenks miteinander verbunden. Die ersten Drehgelenke und das zweite Drehgelenk sind vorzugsweise derart ausgebildet, dass sie jeweils nur einen einzigen Freiheitsgrad aufweisen. Dabei bilden die derart drehbeweglich miteinander verbundenen Hebelarme 11; 14 eine kinematische Kette. Die ersten Hebelarme 11 und/oder die zweiten Hebelarme 14 können jeweils z. B. als parallel zueinander angeordnete Doppelstäbe ausgebildet sein. Die Antriebswellen 08; 09 der beiden Antriebe 06; 07 der betreffenden Handhabungseinrichtung 03 und die jeweiligen Rotationsachsen 12; 13 der beiden ersten Drehgelenke und die Rotationsachse 16 des zweiten Drehgelenks sind jeweils parallel zueinander und z. B. jeweils orthogonal zur durch die betreffende Fördereinrichtung 02 festgelegten Transportebene angeordnet.

Am zweiten Drehgelenk ist ein von der Steuereinheit 04 zumindest in seiner Raumposition gesteuerter Endeffektor 17 angeordnet, wobei der Endeffektor 17 auf einen von der Steuereinheit 04 selektierten mit der betreffenden Fördereinrichtung 02 transportierten Artikel 01 wirkend ausgebildet ist. Der Endeffektor 17 ist z. B. als eine mindestens ein Paar von zusammenwirkenden Greifern aufweisende Greifereinrichtung in Form einer Greiferzange ausgebildet, d. h. als eine die zu transportierenden Hohlkörper zwischen den Greifern greifende Greifereinrichtung, wobei ein Öffnen und/oder ein Schließen eines zusammenwirkenden Paares von Greifern der betreffenden Greifereinrichtung oder ein Betätigen eines sonstigen am Endeffektor 17 ausgebildeten Werkzeugs ebenfalls von der Steuereinheit 04 gesteuert ist oder zumindest sein kann. Der Endeffektor 17 der betreffenden Handhabungseinrichtung 03 ist vorzugsweise in einer zur Transportebene parallelen Handhabungsebene angeordnet. Als Endeffektor 17 wird in der Robotik das letzte Glied in einer kinematischen Kette bezeichnet.

Die Steuereinheit 04 steuert den von der betreffenden Handhabungseinrichtung 03 ausgeführten Bewegungsablauf derart, dass der Endeffektor 17 zu jedem Zeitpunkt der Bewegung eine programmgemäß gewünschte Zielposition im Raum einnimmt. Es ist vorteilhaft, den z. B. als Greifereinrichtung ausgebildeten Endeffektor 17 derart am die zweite Rotationsachse 16 aufweisenden zweiten Drehgelenk anzuordnen, dass der Endeffektor 17 als solcher oder zumindest die Greifer des als Greifereinrichtung ausgebildeten Endeffektors 17 vorzugsweise bei allen Bewegungen der Handhabungseinrichtung 03 jeweils eine definierte bzw. fest bestimmte Winkellage zu dem betreffenden mit der Fördereinrichtung 02 transportierten und von der Steuereinheit 04 selektierten Artikel 01 einnimmt. So ist z. B. vorgesehen, dass der Endeffektor 17 bei sich wiederholenden gleichen Bewegungsabläufe der betreffenden Handhabungseinrichtung 03 auch wiederkehrend zwangsläufig, d. h. durch mechanischkonstruktive Maßnahmen jeweils dieselbe Raumposition einnimmt. Eine besonders vorteilhafte Ausführungsform der vorgeschlagenen Vorrichtung sieht vor, dass der Endeffektor 17 ungeachtet seiner aktuellen Raumposition zu jedem Zeitpunkt dieselbe unveränderte Ausrichtung zu dem von der betreffenden Fördereinrichtung 02 transportierten und sowohl von der Steuereinheit 04 selektierten als auch von der betreffenden Handhabungseinrichtung 03 zu manipulierenden Artikel 01 einnimmt.

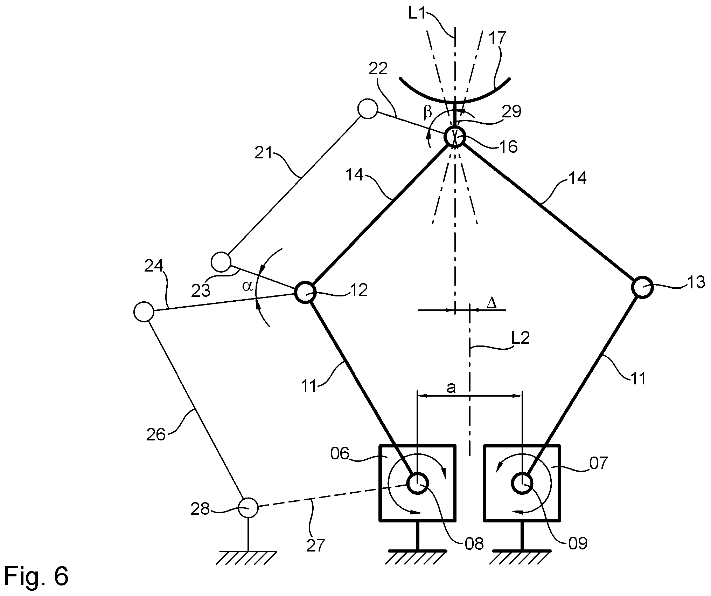

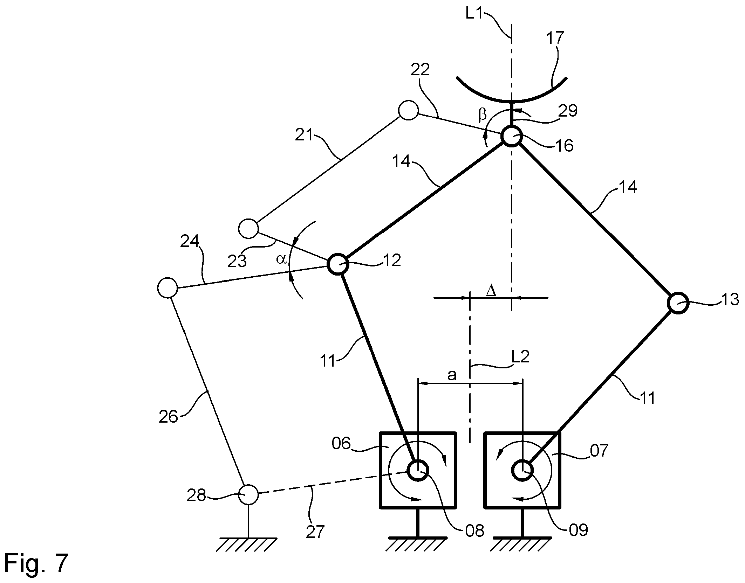

Das Einhalten dieser definierten, zumindest in einem festgelegten Toleranzbereich fest bestimmten Winkellage oder Ausrichtung zu einem der mit der Fördereinrichtung 02 transportierten und mit der Handhabungseinrichtung 03 zu manipulierenden Artikel 01 wird z. B. dadurch erreicht, dass mehrere zusätzliche Hebelarme an der von einem der positionsgeregelten Antriebe 06; 07 ausgehenden aus den Hebelarmen 11; 14 bestehenden Hebelkette drehbeweglich befestigt und mit diesen Hebelarmen 11; 14 jeweils ein Parallelogramm bildend angeordnet sind, wobei die beiden Hebelarme 23; 24, die zusätzlich am eine der ersten Rotationsachsen 12; 13 aufweisenden ersten Drehgelenk angebracht sind, bei allen Bewegungen der Handhabungseinrichtung 03 einen ersten starren Winkel α ausbilden und wobei der zusätzlich am zweiten Drehgelenk angebrachte Hebelarm 22 relativ zu einer die Rotationsachse 16 des zweiten Drehgelenks schneidenden und z. B. quer zur Transportrichtung T der transportierten Artikel 01 verlaufenden Linie L1 in einem zweiten starren Winkel β angeordnet ist. Beispielhaft wird dies in den Figuren 6 und 7 veranschaulicht.

Fig. 6 zeigt eine der in den Fig. 1 bis 5 dargestellten Handhabungseinrichtungen 03; 03a; 03b mit zusätzlichen Hebelarmen 21; 22; 23; 24; 26; 27, wobei diese Hebelarme 21; 22; 23; 24; 26; 27 an einer der von einem der positionsgeregelten Antriebe 06; 07 ausgehenden Hebelkette drehbeweglich befestigt sind. So ist eine aus drei Hebelarmen 21; 22; 23 bestehende zusätzliche Hebelkette vorgesehen, die mit dem zweiten Hebelarm 14 ein Parallelogramm bildend angeordnet ist, wobei ein dritter Hebelarm 21 parallel zum zweiten Hebelarm 14 angeordnet ist, wobei ein vierter Hebelarm 22 mit einem seiner Enden mit dem zweiten Drehgelenk und mit seinem anderen Ende mit einem ersten Ende des dritten Hebelarms 21 jeweils drehbeweglich verbunden ist und wobei ein fünfter Hebelarm 23 mit einem seiner Enden mit dem ersten Drehgelenk und mit seinem anderen Ende mit dem zweiten Ende des dritten Hebelarms 21 jeweils drehbeweglich verbunden ist. Des Weiteren ist eine weitere zusätzliche aus den Hebelarmen 24; 26; 27 bestehende Hebelkette vorgesehen, die mit dem ersten Hebelarm 11 ein Parallelogramm bildend angeordnet ist, wobei ein sechster Hebelarm 24 mit einem seiner Enden mit dem ersten Drehgelenk und mit seinem anderen Ende mit einem ersten Ende des siebten Hebelarms 26 jeweils drehbeweglich verbunden ist. Es kann vorgesehen sein, dass ein achter Hebelarm 27 mit einem seiner Enden mit der Antriebswelle 08 des betreffenden Antriebs 06 und mit seinem anderen Ende an einem weiteren Gelenk 28 mit dem zweiten Ende des siebten Hebelarms 26 jeweils drehbeweglich verbunden ist. Eine dazu alternative Ausführungsform sieht vor, dass das zweite Ende des siebten Hebelarms 26 drehbeweglich mit dem weiteren Gelenk 28 verbunden ist, wobei dieses weitere Gelenk 28 ortsfest oder gestellfest angeordnet ist, so dass dann der achte Hebelarm 27 entfallen kann. Zur Andeutung dieser optionalen Ausführungsform ist der achte Hebelarm 27 in den Fig. 6 und 7 jeweils gestrichelt dargestellt.

Damit der Endeffektor 17 bei allen Bewegungen der Handhabungseinrichtung 03 eine definierte Winkellage zu dem betreffenden mit der Fördereinrichtung 02 transportierten und von der Steuereinheit 04 selektierten Artikel 01 einnimmt, ist vorgesehen, dass der fünfte Hebelarm 23 und der sechste Hebelarm 24, die beide mit einem ihrer jeweiligen Enden zusätzlich am ersten Drehgelenk angebracht sind, in einem ersten starren Winkel α zueinander angeordnet sind. Ebenso ist vorgesehen, dass der zusätzlich am zweiten Drehgelenk angebrachte vierte Hebelarm 22 relativ zu einer die Rotationsachse 16 des zweiten Drehgelenks schneidenden Linie L1 in einem zweiten starren Winkel β angeordnet ist. In einer bevorzugten Ausführungsform erstreckt sich die die Rotationsachse 16 des zweiten Drehgelenks schneidende Linie L1 längs einer den Endeffektor 17 mit dem zweiten Drehgelenk verbindenden Halterung 29, wobei diese Halterung 29 und der vierte Hebelarm 22 vorzugsweise gemeinsam in einem einzigen mechanischen Bauteil ausgebildet sind.

Fig. 7 zeigt nochmals die um die beiden zuvor beschriebenen Hebelketten erweiterte Handhabungseinrichtung 03 aus der Fig. 6, wobei der Endeffektor 17 jedoch zufolge eines zum Erreichen seiner Zielposition programmgemäß ausgeführten Bewegungsablaufs der Handhabungseinrichtung 03 eine andere Position einnimmt als die in der Fig. 6 dargestellte Position. Die in der Fig. 7 dargestellte Position des Endeffektors 17 ist gegenüber dessen in der Fig. 6 dargestellten Position vorzugsweise seitlich z. B. in Transportrichtung T der mit der Fördereinrichtung 02 transportierten Artikel 01 um einen Abstand Δ versetzt, wobei sich dieser Abstand Δ zwischen der die Rotationsachse 16 des zweiten Drehgelenks schneidenden Linie L1 und einer weiteren für den Endeffektor 17 z. B. eine Ausgangsposition festlegenden Linie L2 bemisst, wobei sich diese weitere Linie L2 z. B. parallel zur ersteren Linie L1 und vorzugsweise gleichfalls quer zur Transportrichtung T der transportierten Artikel 01 erstreckt. Diese weitere Linie L2 kann für von der Handhabungseinrichtung 03 ausgeführte Bewegungen z. B. als eine Referenzlinie angesehen werden, wobei diese weitere Linie L2 oder Referenzlinie einen Abstand a zwischen den Antriebswellen 08; 09 der Antriebe 06; 07 vorzugsweise halbierend und orthogonal zu den Antriebswellen 08; 09 der Antriebe 06; 07 angeordnet ist. Aufgrund des starren Winkels β zwischen dem vierten Hebelarm 22 und der Halterung 29 des Endeffektors 17 und aufgrund der Festlegung, dass die die Rotationsachse 16 des zweiten Drehgelenks schneidende Linie L1 entlang der Längsachse dieser Halterung 29 verlaufend angeordnet ist, ergibt sich bei manchen Bewegungen der Handhabungseinrichtung 03, dass der Endeffektor 17 bei seinem Positionswechsel im Raum eine um die Rotationsachse 16 des zweiten Drehgelenks geneigte Lage zu dem betreffenden mit der Fördereinrichtung 02 transportierten und von der Steuereinheit 04 selektierten Artikel 01 einnimmt, was in der Fig. 6 durch zwei z. B. den festgelegten Toleranzbereich begrenzende Hilfslinien angedeutet ist.

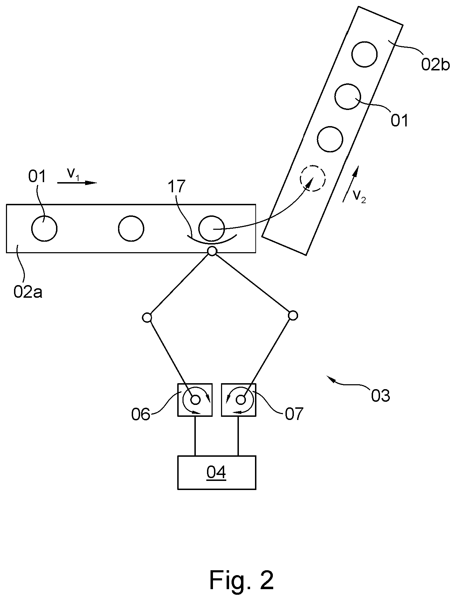

Die betreffende in den Fig. 1 bis 7 beispielhaft dargestellte Handhabungseinrichtung 03 ist z. B. derart auf mit der betreffenden Fördereinrichtung 02 transportierte Artikel 01 wirkend ausgebildet, dass sie eine Teilung der in dem Artikelstrom transportierten Artikel 01 verändert. Dies ist in der Fig. 1 durch eine entsprechende Anordnung der Artikel 01 auf der betreffenden Fördereinrichtung 02 angedeutet. Alternativ oder zusätzlich kann die betreffende Handhabungseinrichtung 03 z. B. derart auf mit der betreffenden Fördereinrichtung 02 transportierte Artikel 01 wirkend ausgebildet sein, dass sie eine Richtung der in dem Artikelstrom transportierten Artikel 01 verändert. Des Weiteren kann die betreffende Handhabungseinrichtung 03 derart auf mit der betreffenden Fördereinrichtung 02 transportierte Artikel 01 wirkend ausgebildet sein, dass sie mit einer ersten Fördereinrichtung 02a mit einer ersten Geschwindigkeit v1 transportierte Artikel 01 an eine zweite Fördereinrichtung 02b zum dortigen Transport mit einer von der ersten Geschwindigkeit v1 verschiedenen zweiten Geschwindigkeit v2 übergibt. Dies ist als zweites Ausführungsbeispiel in der Fig. 2 i.V.m. einem Übergabepfeil angedeutet.

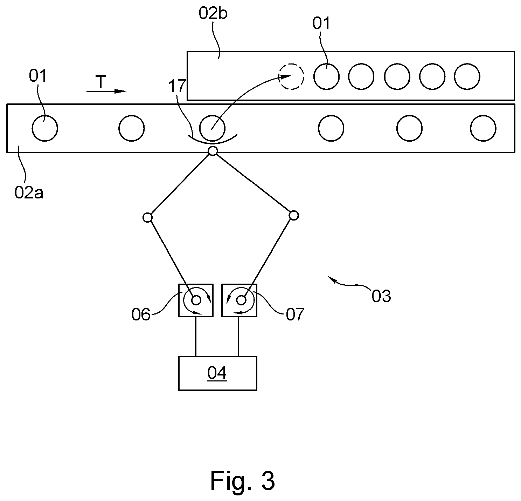

Fig. 3 zeigt ein drittes Ausführungsbeispiel der vorgeschlagenen Vorrichtung, bei der Artikel 01 mittels der betreffenden Handhabungseinrichtung 03 zwischen parallel zueinander angeordneten Fördereinrichtungen 02a; 02b übergeben werden, wobei diese Fördereinrichtungen 02a; 02b die Artikel 01 z. B. in unterschiedliche Richtungen und/oder mit unterschiedlichen Geschwindigkeiten v1; v2 und/oder in einer unterschiedlichen Teilung des Artikelstroms transportieren. Beim Ausführungsbeispiel gemäß Fig. 3 spricht man auch von einem seitlichen Verlagern. Die zweite Fördereinrichtung 02b kann z. B. auch zum selektiven Ausschleusen von Artikeln 01 aus dem mit der ersten Fördereinrichtung 02a transportierten Artikelstrom verwendet werden.

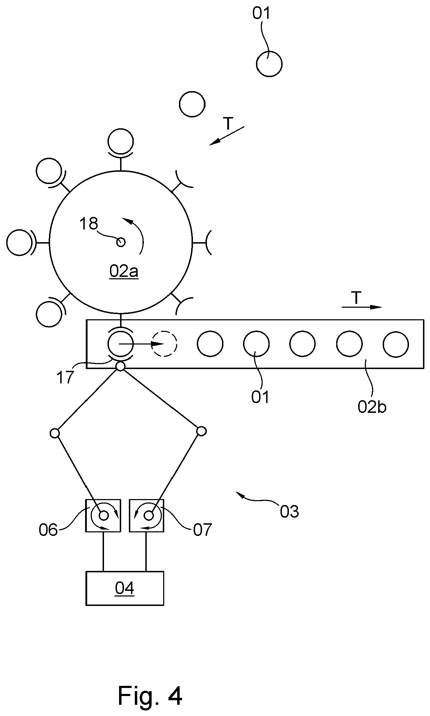

Fig. 4 zeigt ein viertes Ausführungsbeispiel der vorgeschlagenen Vorrichtung, bei der zwei Fördereinrichtungen 02a; 02b vorgesehen sind und z. B. die erste Fördereinrichtung 02a als ein sich um eine orthogonal zur Transportebene stehende Rotationsachse 18 drehender Förderstern ausgebildet ist. Bei diesem vierten Ausführungsbeispiel werden Artikel 01 z. B. von einer gleichförmigen Kreisbewegung vorzugsweise in eine gleichförmige Linearbewegung überführt. Die vorgeschlagene Vorrichtung hat hier den besonderen Vorteil, dass eine Relativbewegung des Artikels 01 bei seiner Übergabe von der ersten Fördereinrichtung 02a an die zweite Fördereinrichtung 02b durch eine entsprechende Programmierung des von der betreffenden Handhabungseinrichtung 03 ausgeführten Bewegungsablaufs vermieden werden kann, wodurch z. B. ein Kippen und/oder Verrutschen und/oder Verschieben und/oder Verkanten des betreffenden Artikels 01 im Moment seines Freigebens aus der ersten Fördereinrichtung 02a verhindert wird. Es kann somit eine sehr genaue Positionierung des betreffenden Artikels 01 und damit auch eine bestimmte Teilung im Artikelstrom eingehalten werden.

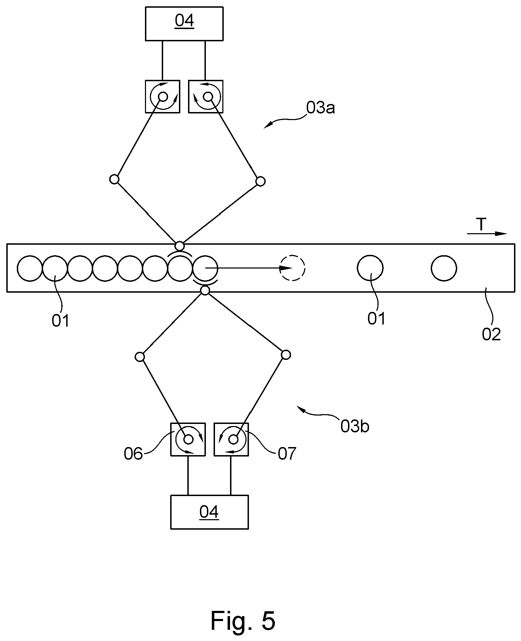

Fig. 5 zeigt ein fünftes Ausführungsbeispiel der vorgeschlagenen Vorrichtung, bei der an der betreffenden Fördereinrichtung 02 zwei Handhabungseinrichtungen 03a; 03b angeordnet sind. Diese Handhabungseinrichtungen 03a; 03b können in ihrem jeweiligen Bewegungsablauf z. B. zyklisch jeweils eine Bewegungsphase ausführend ausgebildet sein, wobei die Bewegungsphasen dieser Handhabungseinrichtungen 03a; 03b z. B. jeweils um 180° zueinander versetzt ablaufend ausgebildet sind. Bei der fünften Ausführungsform der vorgeschlagenen Vorrichtung lässt sich in Transportrichtung T der Artikel 01 auch zunächst mittels der auf den Artikelstrom wirkenden ersten Handhabungseinrichtung 03a eine Staustrecke realisieren, wobei die in Transportrichtung T der Artikel 01 als zweite angeordnete Handhabungseinrichtung 03b dem Vereinzeln der zunächst gestauten Artikel 01 dient.

### Bezugszeichenliste

- 01: Artikel
- 02: Fördereinrichtung (auch 02a und 02b)
- 03: Handhabungseinrichtung (auch 03a und 03b)
- 04: Steuereinheit
- 05: -
- 06: Antrieb
- 07: Antrieb
- 08: Antriebswelle
- 09: Antriebswelle
- 10: -
- 11: erster Hebelarm
- 12: Rotationsachse
- 13: Rotationsachse
- 14: zweiter Hebelarm
- 15: -
- 16: Rotationsachse
- 17: Endeffektor
- 18: Rotationsachse
- 19: -
- 20: -
- 21: dritter Hebelarm
- 22: vierter Hebelarm
- 23: fünfter Hebelarm
- 24: sechster Hebelarm
- 25: -
- 26: siebter Hebelarm
- 27: achter Hebelarm
- 28: Gelenk
- 29: Halterung

- α: (erster) starrer Winkel
- β: (zweiter) starrer Winkel
- Δ: Abstand

- a: Abstand
- L1: Linie
- L2: (Referenz-)Linie
- T: Transportrichtung
- v1: erste Geschwindigkeit
- v2: zweite Geschwindigkeit

## Patentansprüche

1. Vorrichtung aufweisend mindestens eine mehrere diskrete Artikel (01) in einem Artikelstrom transportierende Fördereinrichtung (02; 02a; 02b) und mindestens eine Handhabungseinrichtung (03; 03a; 03b), wobei die betreffende Handhabungseinrichtung (03; 03a; 03b) von einer Steuereinheit (04) gesteuert sequentiell und selektiv auf mit der betreffenden Fördereinrichtung (02; 02a; 02b) in einer Transportebene transportierte Artikel (01) wirkend angeordnet ist, wobei die betreffende Fördereinrichtung (02; 02a; 02b) derart ausgebildet ist, dass sie jeweils als ein Hohlkörper ausgebildete Artikel (01) transportiert, wobei die betreffende Handhabungseinrichtung (03; 03a; 03b) jeweils zwei von der Steuereinheit (04) positionsgeregelte Antriebe (06; 07) aufweist, wobei an der jeweils bidirektional drehbaren Antriebswelle (08; 09) eines jeden dieser Antriebe (06; 07) jeweils mit seinem ersten Ende ein erster Hebelarm (11) drehfest angeordnet ist, wobei am zweiten Ende des jeweiligen ersten Hebelarms (11) jeweils mittels eines um eine erste Rotationsachse (12; 13) drehbeweglichen ersten Drehgelenks ein erstes Ende eines zweiten Hebelarms (14) verbunden ist, wobei die zweiten Enden der jeweiligen zweiten Hebelarme (14) mittels eines um eine zweite Rotationsachse (16) drehbeweglichen zweiten Drehgelenks miteinander verbunden sind, wobei die derart drehbeweglich miteinander verbundenen Hebelarme (11; 14) eine kinematische Kette ausbilden, wobei die Antriebswellen (08; 09) der beiden Antriebe (06; 07) der betreffenden Handhabungseinrichtung (03; 03a; 03b) und die jeweiligen Rotationsachsen (12; 13) der beiden ersten Drehgelenke und die Rotationsachse (16) des zweiten Drehgelenks jeweils parallel zueinander angeordnet sind, wobei am zweiten Drehgelenk ein von der Steuereinheit (04) zumindest in seiner Raumposition gesteuerter Endeffektor (17) angeordnet ist, wobei der Endeffektor (17) auf einen mit der betreffenden Fördereinrichtung (02; 02a; 02b) transportierten und von der Steuereinheit (04) selektierten Artikel (01) wirkend ausgebildet ist, wobei eine aus einem dritten Hebelarm (21) und einem vierten Hebelarm (22) und einem fünften Hebelarm (23) bestehende zusätzliche Hebelkette mit dem zweiten Hebelarm (14) ein Parallelogramm bildend angeordnet ist, wobei eine weitere zusätzliche zumindest aus einem sechsten Hebelarm (24) und einem siebten Hebelarm (26) bestehende Hebelkette mit dem ersten Hebelarm (11) ein Parallelogramm bildend angeordnet ist, wobei der fünfte Hebelarm (23) und der sechste Hebelarm (24), die beide mit einem ihrer jeweiligen Enden zusätzlich am ersten Drehgelenk drehbeweglich angebracht sind, in einem ersten starren Winkel (α) zueinander angeordnet sind, und wobei der zusätzlich am zweiten Drehgelenk angebrachte vierte Hebelarm (22) relativ zu einer die Rotationsachse (16) des zweiten Drehgelenks schneidenden Linie (L1) in einem zweiten starren Winkel (β) angeordnet ist, wobei sich die die Rotationsachse (16) des zweiten Drehgelenks schneidende Linie (L1) längs einer den Endeffektor (17) mit dem zweiten Drehgelenk verbindenden Halterung (29) erstreckt.

2. Vorrichtung nach Anspruch 1, **dadurch gekennzeichnet, dass** der dritte Hebelarm (21) parallel zum zweiten Hebelarm (14) angeordnet ist, wobei der vierte Hebelarm (22) mit einem seiner Enden mit dem zweiten Drehgelenk und mit seinem anderen Ende mit einem ersten Ende des dritten Hebelarms (21) jeweils drehbeweglich verbunden ist und wobei der fünfte Hebelarm (23) mit einem seiner Enden mit dem ersten Drehgelenk und mit seinem anderen Ende mit dem zweiten Ende des dritten Hebelarms (21) jeweils drehbeweglich verbunden ist.

3. Vorrichtung nach Anspruch 1 oder 2, **dadurch gekennzeichnet, dass** das Ende des siebten Hebelarms (26) drehbeweglich mit einem weiteren Gelenk (28) verbunden ist, wobei dieses weitere Gelenk (28) ortsfest oder gestellfest angeordnet ist.

4. Vorrichtung nach Anspruch 1 oder 2 oder 3, **dadurch gekennzeichnet, dass** die betreffende Handhabungseinrichtung (03; 03a; 03b) derart auf mit der betreffenden Fördereinrichtung (02; 02a; 02b) transportierte Artikel (01) wirkend ausgebildet ist, dass sie eine Teilung und/oder eine Richtung der in dem Artikelstrom transportierten Artikel (01) verändert.

5. Vorrichtung nach Anspruch 1 oder 2 oder 3 oder 4, **dadurch gekennzeichnet, dass** die betreffende Handhabungseinrichtung (03; 03a; 03b) derart auf mit der betreffenden Fördereinrichtung (02; 02a; 02b) transportierte Artikel (01) wirkend ausgebildet ist, dass sie mit einer ersten Fördereinrichtung (02a) mit einer ersten Geschwindigkeit (v1) transportierte Artikel (01) an eine zweite Fördereinrichtung (02b) zum dortigen Transport mit einer von der ersten Geschwindigkeit (v1) verschiedenen zweiten Geschwindigkeit (v2) übergibt.

6. Vorrichtung nach Anspruch 1 oder 2 oder 3 oder 4 oder 5, **dadurch gekennzeichnet, dass** der Endeffektor (17) der betreffenden Handhabungseinrichtung (03; 03a; 03b) in einer zur Transportebene parallelen Handhabungsebene angeordnet ist.

7. Vorrichtung nach Anspruch 1 oder 2 oder 3 oder 4 oder 5 oder 6, **dadurch gekennzeichnet, dass** die Halterung (29) des Endeffektors (17) und der vierte Hebelarm (22) gemeinsam in einem einzigen mechanischen Bauteil ausgebildet sind.

8. Vorrichtung nach Anspruch 1 oder 2 oder 3 oder 4 oder 5 oder 6 oder 7, **dadurch gekennzeichnet, dass** der Endeffektor (17) der betreffenden Handhabungseinrichtung (03; 03a; 03b) als eine von der Steuereinheit (04) gesteuerte Greifereinrichtung ausgebildet ist, wobei die Steuereinheit (04) ein Öffnen und/oder ein Schließen der betreffenden Greifereinrichtung oder ein sonstiges am Endeffektor 17 ausgebildetes Werkzeug steuernd ausgebildet ist.

9. Vorrichtung nach Anspruch 1 oder 2 oder 3 oder 4 oder 5 oder 6 oder 7 oder 8, **dadurch gekennzeichnet, dass** die ersten Drehgelenke und das zweite Drehgelenk der betreffenden Handhabungseinrichtung (03; 03a; 03b) derart ausgebildet sind, dass sie jeweils nur einen einzigen Freiheitsgrad aufweisen.

10. Vorrichtung nach Anspruch 1 oder 2 oder 3 oder 4 oder 5 oder 6 oder 7 oder 8 oder 9, **dadurch gekennzeichnet, dass** die Antriebswellen (08; 09) der beiden Antriebe (06; 07) der betreffenden Handhabungseinrichtung (03; 03a; 03b) und die jeweiligen Rotationsachsen (12; 13) der beiden ersten Drehgelenke und die Rotationsachse (16) des zweiten Drehgelenks jeweils orthogonal zur durch die betreffende Fördereinrichtung (02; 02a; 02b) festgelegten Transportebene angeordnet sind.

11. Vorrichtung nach Anspruch 1 oder 2 oder 3 oder 4 oder 5 oder 6 oder 7 oder 8 oder 9 oder 10, **dadurch gekennzeichnet, dass** die betreffende Fördereinrichtung (02; 02a; 02b) als ein Förderband oder als ein Förderstern ausgebildet ist.

12. Vorrichtung nach Anspruch 1 oder 2 oder 3 oder 4 oder 5 oder 6 oder 7 oder 8 oder 9 oder 10 oder 11, **dadurch gekennzeichnet, dass** die betreffende Fördereinrichtung (02; 02a; 02b) derart ausgebildet ist, dass sie als Artikel (01) jeweils als eine Flasche oder Dose ausgebildete Hohlkörper transportiert.

13. Vorrichtung nach Anspruch 1 oder 2 oder 3 oder 4 oder 5 oder 6 oder 7 oder 8 oder 9 oder 10 oder 11 oder 12, **dadurch gekennzeichnet, dass** an der betreffenden Fördereinrichtung (02; 02a; 02b) zwei zyklisch jeweils eine Bewegungsphase ausführende Handhabungseinrichtungen (03a; 03b) angeordnet sind, wobei die Bewegungsphasen dieser Handhabungseinrichtungen (03a; 03b) jeweils um 180° zueinander versetzt ablaufend ausgebildet sind.

## Claims

1. Device comprising at least one conveying device (02; 02a; 02b) conveying a plurality of discrete articles (01) in an article stream and at least one handling device (03; 03a; 03b), wherein the respective handling device (03; 03a; 03b) is arranged, controlled by a control unit (04), so as to act sequentially and selectively on articles (01) conveyed by the respective conveying device (02; 02a; 02b) in a transport plane, wherein the respective conveying device (02; 02a; 02b) is designed such that it conveys articles (01) each designed as a hollow body, wherein the respective handling device (03; 03a; 03b) has in each case two drives (06; 07) position-controlled by the control unit (04), wherein a first lever arm (11) is arranged rotationally fixed with its first end on the respectively bidirectionally rotatable drive shaft (08; 09) of each of these drives (06; 07), wherein at the second end of the respective first lever arm (11) a first end of a second lever arm (14) is connected in each case by means of a first rotary joint rotatably movable about a first axis of rotation (12; 13), wherein the second ends of the respective second lever arms (14) are connected to one another by means of a second rotary joint rotatably movable about a second axis of rotation (16), wherein the lever arms (11; 14) thus connected to one another in a rotatably movable manner form a kinematic chain, wherein the drive shafts (08; 09) of the two drives (06; 07) of the respective handling device (03; 03a; 03b) and the respective axes of rotation (12; 13) of the two first rotary joints and the axis of rotation (16) of the second rotary joint are each arranged parallel to one another, wherein an end effector (17), controlled by the control unit (04) at least in its spatial position, is arranged at the second rotary joint, wherein the end effector (17) is designed to act on an article (01) conveyed by the respective conveying device (02; 02a; 02b) and selected by the control unit (04), wherein an additional lever chain consisting of a third lever arm (21) and a fourth lever arm (22) and a fifth lever arm (23) is arranged so as to form a parallelogram with the second lever arm (14), wherein a further additional lever chain consisting at least of a sixth lever arm (24) and a seventh lever arm (26) is arranged so as to form a parallelogram with the first lever arm (11), wherein the fifth lever arm (23) and the sixth lever arm (24), which are both additionally mounted rotatably movably with one of their respective ends on the first rotary joint, are arranged at a first rigid angle (α) to one another, and wherein the fourth lever arm (22) additionally mounted on the second rotary joint is arranged at a second rigid angle (β) relative to a line (L1) intersecting the axis of rotation (16) of the second rotary joint, wherein the line (L1) intersecting the axis of rotation (16) of the second rotary joint extends along a holder (29) connecting the end effector (17) to the second rotary joint.

2. Device according to claim 1, **characterized in that** the third lever arm (21) is arranged parallel to the second lever arm (14), wherein the fourth lever arm (22) is connected in each case rotatably movably with one of its ends to the second rotary joint and with its other end to a first end of the third lever arm (21), and wherein the fifth lever arm (23) is connected in each case rotatably movably with one of its ends to the first rotary joint and with its other end to the second end of the third lever arm (21).

3. Device according to claim 1 or 2, **characterized in that** the end of the seventh lever arm (26) is connected rotatably movably to a further joint (28), wherein this further joint (28) is arranged stationary or frame-fixed.

4. Device according to claim 1 or 2 or 3, **characterized in that** the respective handling device (03; 03a; 03b) is designed to act on articles (01) conveyed by the respective conveying device (02; 02a; 02b) in such a way that it changes a pitch and/or a direction of the articles (01) conveyed in the article stream.

5. Device according to claim 1 or 2 or 3 or 4, **characterized in that** the respective handling device (03; 03a; 03b) is designed to act on articles (01) conveyed by the respective conveying device (02; 02a; 02b) in such a way that it transfers articles (01) conveyed by a first conveying device (02a) at a first speed (v1) to a second conveying device (02b) for conveyance there at a second speed (v2) different from the first speed (v1).

6. Device according to claim 1 or 2 or 3 or 4 or 5, **characterized in that** the end effector (17) of the respective handling device (03; 03a; 03b) is arranged in a handling plane parallel to the transport plane.

7. Device according to claim 1 or 2 or 3 or 4 or 5 or 6, **characterized in that** the holder (29) of the end effector (17) and the fourth lever arm (22) are formed jointly in a single mechanical component.

8. Device according to claim 1 or 2 or 3 or 4 or 5 or 6 or 7, **characterized in that** the end effector (17) of the respective handling device (03; 03a; 03b) is designed as a gripper device controlled by the control unit (04), wherein the control unit (04) is designed to control an opening and/or a closing of the respective gripper device or some other tool formed on the end effector (17).

9. Device according to claim 1 or 2 or 3 or 4 or 5 or 6 or 7 or 8, **characterized in that** the first rotary joints and the second rotary joint of the respective handling device (03; 03a; 03b) are designed such that they each have only a single degree of freedom.

10. Device according to claim 1 or 2 or 3 or 4 or 5 or 6 or 7 or 8 or 9, **characterized in that** the drive shafts (08; 09) of the two drives (06; 07) of the respective handling device (03; 03a; 03b) and the respective axes of rotation (12; 13) of the two first rotary joints and the axis of rotation (16) of the second rotary joint are each arranged orthogonally to the transport plane defined by the respective conveying device (02; 02a; 02b).

11. Device according to claim 1 or 2 or 3 or 4 or 5 or 6 or 7 or 8 or 9 or 10, **characterized in that** the respective conveying device (02; 02a; 02b) is designed as a conveyor belt or as a conveyor star.

12. Device according to claim 1 or 2 or 3 or 4 or 5 or 6 or 7 or 8 or 9 or 10 or 11, **characterized in that** the respective conveying device (02; 02a; 02b) is designed such that it conveys, as articles (01), hollow bodies each designed as a bottle or can.

13. Device according to claim 1 or 2 or 3 or 4 or 5 or 6 or 7 or 8 or 9 or 10 or 11 or 12, **characterized in that** two handling devices (03a; 03b) each cyclically executing a movement phase are arranged on the respective conveying device (02; 02a; 02b), wherein the movement phases of these handling devices (03a; 03b) are designed to run offset by 180° with respect to one another.

## Revendications

1. Dispositif comprenant au moins un dispositif de transport (02 ; 02a ; 02b) transportant plusieurs articles discrets (01) dans un flux d'articles et au moins un dispositif de manipulation (03 ; 03a ; 03b), dans lequel le dispositif de manipulation concerné (03 ; 03a ; 03b) est agencé, commandé par une unité de commande (04), pour agir de manière séquentielle et sélective sur des articles (01) transportés par le dispositif de transport concerné (02 ; 02a ; 02b) dans un plan de transport, dans lequel le dispositif de transport concerné (02 ; 02a ; 02b) est réalisé de telle sorte qu'il transporte des articles (01) réalisés chacun sous la forme d'un corps creux, dans lequel le dispositif de manipulation concerné (03 ; 03a ; 03b) présente à chaque fois deux entraînements (06 ; 07) à régulation de position par l'unité de commande (04), dans lequel un premier bras de levier (11) est disposé solidaire en rotation par sa première extrémité sur l'arbre d'entraînement (08 ; 09) respectivement rotatif bidirectionnellement de chacun de ces entraînements (06 ; 07), dans lequel, à la seconde extrémité du premier bras de levier (11) respectif, une première extrémité d'un second bras de levier (14) est reliée à chaque fois au moyen d'une première articulation rotative mobile en rotation autour d'un premier axe de rotation (12 ; 13), dans lequel les secondes extrémités des seconds bras de levier (14) respectifs sont reliées l'une à l'autre au moyen d'une seconde articulation rotative mobile en rotation autour d'un second axe de rotation (16), dans lequel les bras de levier (11 ; 14) ainsi reliés l'un à l'autre de manière mobile en rotation forment une chaîne cinématique, dans lequel les arbres d'entraînement (08 ; 09) des deux entraînements (06 ; 07) du dispositif de manipulation concerné (03 ; 03a ; 03b) et les axes de rotation (12 ; 13) respectifs des deux premières articulations rotatives et l'axe de rotation (16) de la seconde articulation rotative sont disposés à chaque fois parallèlement les uns aux autres, dans lequel un effecteur terminal (17), commandé par l'unité de commande (04) au moins dans sa position spatiale, est disposé au niveau de la seconde articulation rotative, dans lequel l'effecteur terminal (17) est réalisé pour agir sur un article (01) transporté par le dispositif de transport concerné (02 ; 02a ; 02b) et sélectionné par l'unité de commande (04), dans lequel une chaîne de bras de levier supplémentaire constituée d'un troisième bras de levier (21) et d'un quatrième bras de levier (22) et d'un cinquième bras de levier (23) est disposée en formant un parallélogramme avec le second bras de levier (14), dans lequel une autre chaîne de bras de levier supplémentaire constituée au moins d'un sixième bras de levier (24) et d'un septième bras de levier (26) est disposée en formant un parallélogramme avec le premier bras de levier (11), dans lequel le cinquième bras de levier (23) et le sixième bras de levier (24), qui sont tous deux montés en outre de manière mobile en rotation par l'une de leurs extrémités respectives sur la première articulation rotative, sont disposés selon un premier angle rigide (α) l'un par rapport à l'autre, et dans lequel le quatrième bras de levier (22) monté en outre sur la seconde articulation rotative est disposé selon un second angle rigide (β) par rapport à une ligne (L1) coupant l'axe de rotation (16) de la seconde articulation rotative, dans lequel la ligne (L1) coupant l'axe de rotation (16) de la seconde articulation rotative s'étend le long d'un support (29) reliant l'effecteur terminal (17) à la seconde articulation rotative.

2. Dispositif selon la revendication 1, **caractérisé en ce que** le troisième bras de levier (21) est disposé parallèlement au second bras de levier (14), dans lequel le quatrième bras de levier (22) est relié à chaque fois de manière mobile en rotation par l'une de ses extrémités à la seconde articulation rotative et par son autre extrémité à une première extrémité du troisième bras de levier (21), et dans lequel le cinquième bras de levier (23) est relié à chaque fois de manière mobile en rotation par l'une de ses extrémités à la première articulation rotative et par son autre extrémité à la seconde extrémité du troisième bras de levier (21).

3. Dispositif selon la revendication 1 ou 2, **caractérisé en ce que** l'extrémité du septième bras de levier (26) est reliée de manière mobile en rotation à une autre articulation (28), dans lequel cette autre articulation (28) est disposée de manière fixe ou solidaire du bâti.

4. Dispositif selon la revendication 1 ou 2 ou 3, **caractérisé en ce que** le dispositif de manipulation concerné (03 ; 03a ; 03b) est réalisé pour agir sur des articles (01) transportés par le dispositif de transport concerné (02 ; 02a ; 02b) de telle sorte qu'il modifie un pas et/ou une direction des articles (01) transportés dans le flux d'articles.

5. Dispositif selon la revendication 1 ou 2 ou 3 ou 4, **caractérisé en ce que** le dispositif de manipulation concerné (03 ; 03a ; 03b) est réalisé pour agir sur des articles (01) transportés par le dispositif de transport concerné (02 ; 02a ; 02b) de telle sorte qu'il transfère des articles (01) transportés par un premier dispositif de transport (02a) à une première vitesse (v1) à un second dispositif de transport (02b) en vue de leur transport à cet endroit à une seconde vitesse (v2) différente de la première vitesse (v1).

6. Dispositif selon la revendication 1 ou 2 ou 3 ou 4 ou 5, **caractérisé en ce que** l'effecteur terminal (17) du dispositif de manipulation concerné (03 ; 03a ; 03b) est disposé dans un plan de manipulation parallèle au plan de transport.

7. Dispositif selon la revendication 1 ou 2 ou 3 ou 4 ou 5 ou 6, **caractérisé en ce que** le support (29) de l'effecteur terminal (17) et le quatrième bras de levier (22) sont réalisés conjointement en une seule pièce mécanique.

8. Dispositif selon la revendication 1 ou 2 ou 3 ou 4 ou 5 ou 6 ou 7, **caractérisé en ce que** l'effecteur terminal (17) du dispositif de manipulation concerné (03 ; 03a ; 03b) est réalisé sous la forme d'un dispositif de préhension commandé par l'unité de commande (04), dans lequel l'unité de commande (04) est réalisée pour commander une ouverture et/ou une fermeture du dispositif de préhension concerné ou un autre outil réalisé sur l'effecteur terminal (17).

9. Dispositif selon la revendication 1 ou 2 ou 3 ou 4 ou 5 ou 6 ou 7 ou 8, **caractérisé en ce que** les premières articulations rotatives et la seconde articulation rotative du dispositif de manipulation concerné (03 ; 03a ; 03b) sont réalisées de telle sorte qu'elles ne présentent chacune qu'un seul degré de liberté.

10. Dispositif selon la revendication 1 ou 2 ou 3 ou 4 ou 5 ou 6 ou 7 ou 8 ou 9, **caractérisé en ce que** les arbres d'entraînement (08 ; 09) des deux entraînements (06 ; 07) du dispositif de manipulation concerné (03 ; 03a ; 03b) et les axes de rotation (12 ; 13) respectifs des deux premières articulations rotatives et l'axe de rotation (16) de la seconde articulation rotative sont disposés à chaque fois orthogonalement au plan de transport défini par le dispositif de transport concerné (02 ; 02a ; 02b).

11. Dispositif selon la revendication 1 ou 2 ou 3 ou 4 ou 5 ou 6 ou 7 ou 8 ou 9 ou 10, **caractérisé en ce que** le dispositif de transport concerné (02 ; 02a ; 02b) est réalisé sous la forme d'une bande transporteuse ou d'une étoile de transport.

12. Dispositif selon la revendication 1 ou 2 ou 3 ou 4 ou 5 ou 6 ou 7 ou 8 ou 9 ou 10 ou 11, **caractérisé en ce que** le dispositif de transport concerné (02 ; 02a ; 02b) est réalisé de telle sorte qu'il transporte, en tant qu'articles (01), des corps creux réalisés chacun sous la forme d'une bouteille ou d'une canette.

13. Dispositif selon la revendication 1 ou 2 ou 3 ou 4 ou 5 ou 6 ou 7 ou 8 ou 9 ou 10 ou 11 ou 12, **caractérisé en ce que** deux dispositifs de manipulation (03a ; 03b) exécutant chacun cycliquement une phase de mouvement sont disposés au niveau du dispositif de transport concerné (02 ; 02a ; 02b), dans lequel les phases de mouvement de ces dispositifs de manipulation (03a ; 03b) sont réalisées de manière à se dérouler décalées de 180° l'une par rapport à l'autre.
